# FASCICULE DE BREVET EUROPEEN

(11) **EP 4 104 935 B1**
(45) Date de publication et mention de la délivrance du brevet: **23.07.2025**
(21) Numéro de dépôt: 22178812.8
(22) Date de dépôt: 14.06.2022
(51) Int. Cl.: B05B 5/00, B05B 5/04, B05B 12/18, B05B 3/10

(54) **PULVÉRISATEUR ROTATIF DE PRODUIT DE REVÊTEMENT ET PROCÉDÉ DE CONTRÔLE D'UNE TEMPÉRATURE DE SURFACE D'UN TEL PULVÉRISATEUR**
ROTATIONSSPRÜHGERÄT FÜR BESCHICHTUNGSMATERIAL UND VERFAHREN ZUR REGULIERUNG EINER OBERFLÄCHENTEMPERATUR EINES SOLCHEN SPRÜHGERÄTS
ROTARY DEVICE FOR SPRAYING A COATING PRODUCT AND METHOD FOR CONTROLLING A SURFACE TEMPERATURE OF SUCH A SPRAYING DEVICE

(30) Priorité: 15.06.2021 FR 2106308
(43) Date de publication de la demande: 21.12.2022
(73) Titulaire: Exel Industries, 51200 Epernay (FR)
(72) Inventeur: PERINET, Sylvain, 75009 Paris (FR); VANZETTO, Denis, 75009 Paris (FR)
(74) Mandataire: Lavoix

(56) Documents cités:
- EP-A1- 2 808 089
- FR-A1- 2 860 996
- FR-A1- 2 906 162
- JP-B2- 4 927 738
- US-A1- 2004 081 769
- US-A1- 2013 017 068
- US-A1- 2018 345 304

## Description

La présente invention concerne un pulvérisateur rotatif de produit de revêtement destiné notamment à être utilisé pour l'application de produit de revêtement sur une surface à revêtir. L'invention concerne également un procédé de contrôle d'une température de surface d'un tel pulvérisateur.

Un pulvérisateur rotatif est, par exemple, utilisé pour appliquer un revêtement de type peinture ou vernis sur une carrosserie de véhicule automobile, sur un composant de véhicule automobile ou sur une carcasse d'appareil électroménager.

Comme montré dans US 2018/345304 A1, un tel pulvérisateur comprend un bol entrainé en rotation autour d'un axe de rotation au moyen d'une turbine qui peut être une turbine à air, c'est-à-dire une turbine qui comprend un rotor dont la mise en rotation résulte de l'écoulement d'un flux d'air qui impacte des ailettes solidaires du rotor.

Ce type de pulvérisateur donne globalement satisfaction. Toutefois, un problème se pose à cause de la détente de l'air d'entraînement qui doit être amené jusqu'au voisinage des ailettes avec une pression relativement importante, de l'ordre de 6 bar et qui est à une pression voisine de la pression atmosphérique en sortie de la turbine. Cette détente de l'air d'entraînement, qui devient l'air d'échappement après avoir impacté les ailettes du rotor, a pour effet de le refroidir de façon significative, avec une amplitude de température de l'ordre de 20°.

Ainsi, en considérant que l'air pénètre dans la turbine à une température de 20 à 25 degré Celsius (°C), et une humidité relative entre 55% et 65%, la température de l'air d'échappement en sortie de la turbine peut être inférieure au point de rosée, qui est compris entre 10 et 18°C, ce qui a pour effet de condenser l'humidité de l'air, au point que des gouttelettes d'eau peuvent s'accumuler sur l'extérieur du pulvérisateur, même si le corps de la turbine est revêtu d'un capot. Ces gouttelettes d'eau sont susceptibles de se détacher du pulvérisateur en cours de pulvérisation et peuvent tomber par gravité, ou être entrainées par un phénomène aéraulique, jusque sur la surface en cours de revêtement. Ceci crée alors un défaut dans la couche de revêtement appliquée.

En pratique, ceci n'est pas acceptable et il est connu de tenter de réguler l'écoulement d'air d'entraînement d'une turbine à air pour limiter les risques de condensation d'eau du fait de la température de l'air d'échappement.

Par exemple, EP-A-2 808 089 enseigne de diriger une partie de l'air d'alimentation d'un palier à air dans un volume où pourrait se produire une dépression. Cette approche a pour effet d'augmenter la consommation globale d'air du pulvérisateur, ce qui demande des ressources supplémentaires pour la production d'air sous pression et augmente le coût d'exploitation d'une installation de revêtements équipée d'un tel pulvérisateur.

Il est également connu d'insérer un réchauffeur d'air électrique sur une ligne d'alimentation en air d'un pulvérisateur, afin d'amener l'air d'entraînement à une température de l'ordre de 40° C, au point que l'air d'échappement ne risque pas d'atteindre, en sortie de la turbine, une température pouvant induire une condensation de l'humidité présente dans l'air. Cette approche est particulièrement énergivore et requiert l'acquisition d'un matériel supplémentaire onéreux.

L'invention vise à résoudre ces problèmes en proposant un nouveau pulvérisateur rotatif de produit de revêtement avec lequel le risque de condensation d'eau à la surface du pulvérisateur est largement diminué, voire complétement supprimé, sans réduire sensiblement les performances énergétiques du pulvérisateur.

À cet effet, l'invention concerne un pulvérisateur rotatif de produit de revêtement comprenant un bol de pulvérisation tournant autour d'un axe de rotation et une turbine à air d'entraînement du bol en rotation autour de cet axe, cette turbine comprenant un rotor et un corps formant un support pour ce rotor et définissant au moins un conduit d'alimentation en air d'une chambre de rotation dans laquelle sont disposés des ailettes du rotor. Selon l'invention, le conduit d'alimentation en air de la chambre de rotation comprend une chambre intermédiaire définie, radialement à l'axe de rotation, entre le corps de la turbine et une bague montée autour de ce corps. En outre, la bague est pourvue, sur sa surface radiale interne, d'au moins un relief, notamment de nervures ou d'un filet, configuré pour favoriser un échange thermique entre, d'une part, l'air circulant dans la chambre intermédiaire et, d'autre part, la bague.

Grâce à l'invention, la chambre intermédiaire du conduit d'alimentation, qui est définie entre le corps et la bague montée autour de celui-ci, constitue une zone de circulation d'air relativement chaud dans la partie la plus externe du corps, ce qui évite un abaissement marqué de la température de la périphérie du corps dans cette zone. Ceci a pour effet de limiter les risques de condensation dans cette zone du pulvérisateur. L'air qui circule dans cette chambre intermédiaire est ensuite utilisé pour entraîner le rotor en rotation, voire pour alimenter un autre composant que la turbine. Par un autre composant de la turbine, il peut être entendu un organe de conformation du flux conique de peinture, également appelé « jupe d'air », ou encore un capteur sonore configuré pour mesurer la vitesse de rotation du rotor. Le fait d'utiliser un flux d'air d'alimentation d'un élément de turbine permet de réduire la consommation énergétique du dispositif par rapport à une solution utilisant un flux d'air dédié uniquement à limiter le refroidissement, ou un dispositif de chauffage du flux entrant.

Comme la chambre de rotation est alimentée par le conduit qui comprend la chambre intermédiaire, l'air qui circule dans la chambre intermédiaire ne doit pas être amené au pulvérisateur en plus de l'air utilisé pour assurer le fonctionnement normal du pulvérisateur. En outre, plus la turbine accélère, plus l'air d'échappement refroidit mais plus le débit d'air d'alimentation augmente et plus l'effet thermique de l'air qui circule dans la chambre intermédiaire est important. En d'autres termes, le refroidissement de l'air d'échappement de la turbine et la compensation de ce refroidissement obtenu grâce à la bague montée autour du corps du pulvérisateur évoluent dans le même sens en fonction de la vitesse de rotation de la turbine. De plus, l'air d'alimentation de la turbine étant le flux le plus puissant et présentant le débit le plus important parmi les différents flux alimentant un composant fonctionnel du pulvérisateur, cela permet d'obtenir des performances de réchauffage plus importantes car une plus grande quantité d'air est exposée à l'effet de transfert thermique entre l'extérieur du pulvérisateur et l'air de la chambre intermédiaire via la bague. En outre, comme les pertes de charge sont liées à la pression et au débit de l'air d'alimentation, la dépense d'énergie due à ces pertes de charge est fonction des besoins énergétiques pour la mise en rotation du bol du pulvérisateur.

Selon des aspects avantageux mais non obligatoires de l'invention, un tel pulvérisateur peut incorporer une ou plusieurs des caractéristiques suivantes prises selon toute combinaison techniquement admissible :
- Le conduit d'alimentation comprend au moins une branche qui s'étend parallèlement à l'axe de rotation et un coude qui relie cette branche avec la chambre intermédiaire, radialement à l'axe de rotation.
- Le conduit d'alimentation comprend une portion en spirale perpendiculaire à l'axe de rotation, qui débouche dans la chambre de rotation, et un coude qui relie la chambre intermédiaire avec la portion en spirale.
- Le pulvérisateur est équipé d'un composant définissant des canaux de circulation d'air de conformation d'un nuage de gouttelettes quittant l'arête du bol de pulvérisation, alors que le conduit qui comprend la chambre intermédiaire alimente ces canaux en air de jupe.
- Le pulvérisateur est équipé d'au moins une cavité, solidaire du rotor, et d'un microphone de mesure du bruit d'un écoulement d'air provenant de la cavité pour déterminer la vitesse de rotation du bol de pulvérisation, alors que le conduit qui comprend la chambre intermédiaire alimente le microphone en air à travers la cavité.
- Le corps comprend une partie tubulaire qui définit un logement de réception du rotor et une embase qui obture le logement à l'opposé du bol et la bague est montée à la fois autour de la partie tubulaire et de l'embase.
- La bague est en métal.
- Le pulvérisateur comprend un sous-ensemble d'équilibrage de potentiel électrique entre la bague et le corps, ce sous-ensemble étant prévu notamment sous la forme d'un organe électriquement conducteur élastiquement déformable en appui, direct ou via un élément électriquement conducteur rapporté, contre la bague et contre le corps.
- La bague est immobilisée autour du corps par coincement.
- Au moins un joint d'étanchéité, de préférence deux joints d'étanchéité, est ou sont interposé(s) entre le corps et la bague et contribue(nt) au coincement de la bague autour du corps.
- La chambre intermédiaire est ménagée autour d'une partie du corps dans laquelle est ménagé un collecteur de gaz d'échappement de la turbine.
- Le pulvérisateur est équipé d'un capteur de température pour déterminer la température de l'air dans la chambre intermédiaire, la température de la bague ou la température d'un capot du pulvérisateur.

Selon un autre aspect, l'invention concerne un procédé de contrôle d'une température de surface d'un pulvérisateur rotatif de produit de revêtement comprenant un bol de pulvérisation tournant autour d'un axe de rotation et une turbine à air d'entraînement du bol en rotation autour de l'axe de rotation, cette turbine comprenant un rotor et un corps formant un support pour le rotor, ce procédé comprenant une étape d'alimentation en air d'une chambre de rotation dans laquelle sont disposées des ailettes du rotor. Selon l'invention, l'étape d'alimentation comprend une sous-étape consistant à dévier un écoulement d'air d'entrainement du rotor vers une zone périphérique du corps et vers une chambre intermédiaire (132) définie, radialement à l'axe de rotation (X2), entre le corps (16) et une bague (32, 90) montée autour de ce corps et pourvue, sur sa surface radiale interne (322), d'au moins un relief, notamment de nervures (36) ou d'un filet, pour limiter un abaissement de la température d'un élément d'habillage du pulvérisateur.

Avantageusement, une unité de contrôle du pulvérisateur est configurée pour ajuster les paramètres de fonctionnement du pulvérisateur, ou d'une cabine dans laquelle est installé le pulvérisateur, en fonction du signal de sortie du capteur de température.

L'invention sera mieux comprise et d'autres avantages de celle-ci apparaitront plus clairement à la lumière de la description qui va suivre d'un mode de réalisation d'un pulvérisateur conforme à son principe et d'un procédé de contrôle de sa température de surface, donné uniquement à titre d'exemple et fait en référence aux dessins annexés dans lesquels :
[Fig. 1] la figure 1 est une coupe axiale d'un pulvérisateur rotatif conforme à l'invention monté sur le poignet d'un robot manipulateur ;
[Fig. 2] La figure 2 est une coupe axiale d'une turbine appartenant au pulvérisateur représenté à la figure 1 ;
[Fig. 3] La figure 3 est une vue à plus grande échelle du détail III à la figure 2 ;
[Fig. 4] La figure 4 est une coupe axiale de la turbine des figures 2 et 3 prise dans un plan décalé autour d'un axe de rotation par rapport à celui des figures 2 et 3 ;

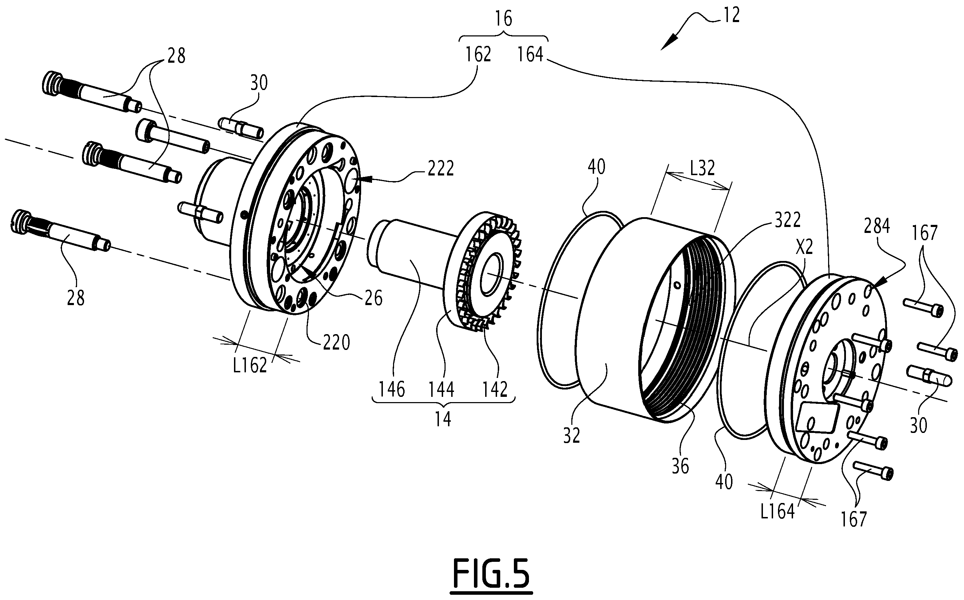

[Fig. 5] La figure 5 est une vue en perspective éclatée de la turbine des figures 2 à 4 ;
[Fig. 6] La figure 6 est une vue en perspective de la turbine des figures 2 à 5, selon la flèche VI à la figure 2, dans laquelle une embase est omise, pour la clarté du dessin ; et
[Fig. 7] La figure 7 est une coupe en perspective de la turbine des figures 2 à 6, l'embase étant représentée séparée du reste de la turbine et vue selon un angle différent.

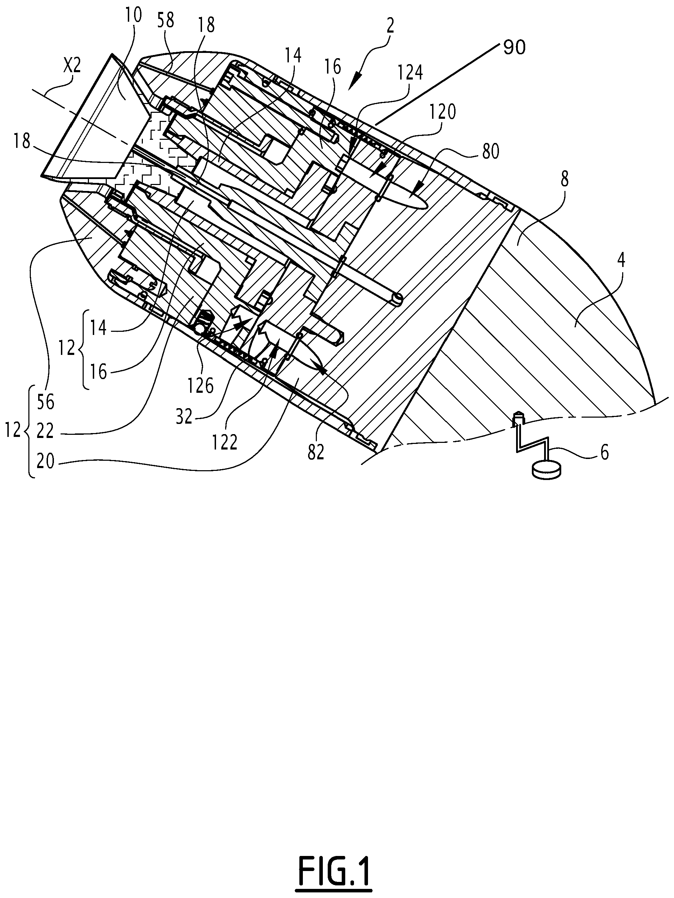

Le pulvérisateur électrostatique 2 représenté à la figure 1 est monté sur le poignet 4 d'un robot multiaxe 6 représenté de façon très schématique. Le poignet 4 définit une zone d'interface 8 dans laquelle circulent des conduits d'alimentation non-représentés du pulvérisateur 2 en fluides, notamment en air d'entraînement d'une turbine, en air de jupe et en produit de revêtement liquide, ainsi que des câbles d'alimentation de parties à la haute tension.

Le pulvérisateur 2 comprend un bol 10 destiné à être mis en rotation autour d'un axe de rotation X2 défini par un corps 2A du pulvérisateur 2. Le bol 10 est entrainé en rotation autour de l'axe X2 par une turbine à air 12 qui comprend un rotor 14 mobile en rotation autour de l'axe X2 et dont le bol 10 est solidaire, ainsi qu'un corps 16 qui forme un support pour le rotor 14.

Le corps 2A comprend une partie principale 20 sur laquelle est rapportée la turbine 12 et qui est en appui contre la zone d'interface 8 et un corps auxiliaire 22.

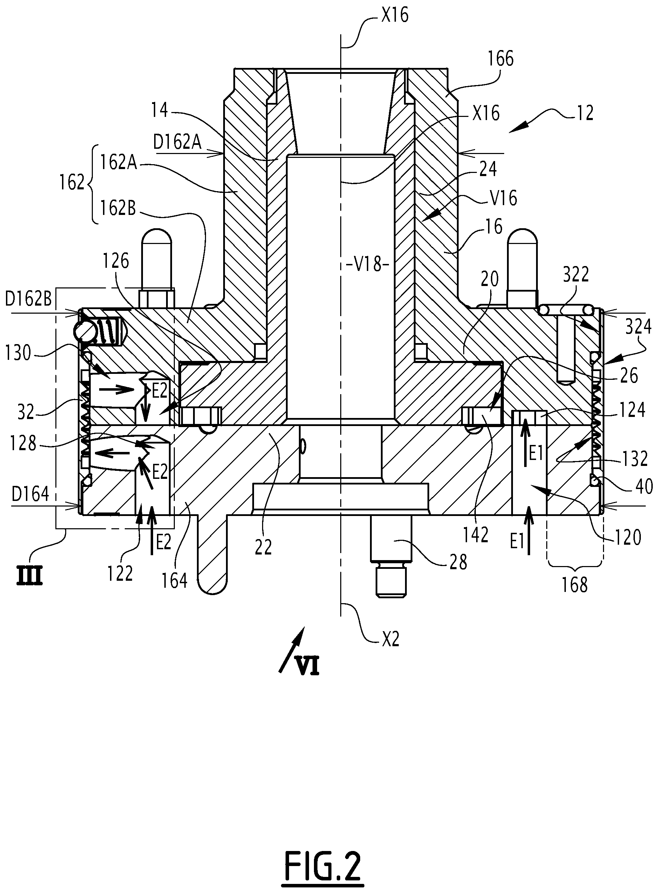

La turbine 12, qui est un des composants du pulvérisateur 2, est représentée seule aux figures 2 et suivantes.

Le rotor 14 et le corps 16 sont creux et définissent ensemble un volume V18 qui forme un logement de réception d'un injecteur 18 de produit de revêtement qui permet d'amener, au plus près du bol 10, un écoulement de produit de revêtement liquide à pulvériser au moyen du bol 10.

Ici, de façon avantageuse, l'injecteur est aligné sur l'axe X2.

Le rotor 14 est équipé d'ailettes 142 qui sont ménagées sur une surface annulaire et axiale 143 d'une bague 144 montée autour d'un moyeu 146. Le nombre, la répartition et la géométrie des ailettes dépend du choix de conception du rotor 14, de la vitesse de rotation prévue pour le bol 10.

En variante, d'autres structures sont envisageables pour le rotor 14. Par exemple, les parties 144 et 146 peuvent être monobloc ou les ailettes peuvent être ménagées sur une surface périphérique du rotor 14.

Le corps 16 comprend une partie tubulaire 162 et une embase 164, centrées respectivement sur un axe longitudinal X162 et X164. En configuration assemblée du corps 16, les axes X162 et X164 sont confondus et définissent un axe central X16 du corps 16. En configuration montée du pulvérisateur 2, les axes X2 et X16 sont confondus.

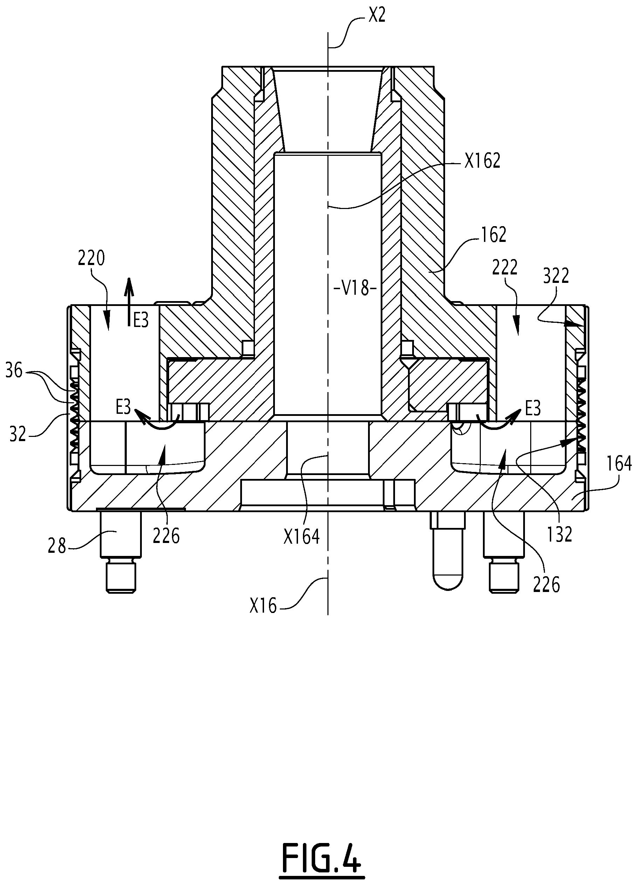

La partie tubulaire 162 définit un volume V16 de réception du rotor 14, lequel est introduit dans ce volume de réception par le dessous aux figures 2 et 4, alors que l'embase 164 permet de refermer ce volume vers le bas sur ces figures. Le volume V16 est centré sur l'axe X16.

Deux paliers à air non représentés sont respectivement formés de part et d'autre de la bague 144, le long de l'axe X2. Ils permettent de positionner le rotor 14 par rapport au corps 16, dans le volume V16 et le long de l'axe X2, lorsqu'ils sont alimentés en air. Les paliers à air permettent une rotation sans contact du rotor 14 dans le corps 16. Les paliers à air participent au centrage du rotor 14 le long de l'axe X2 et peuvent être qualifiés de paliers à air axiaux.

D'autre part, un palier à air radial est formé autour du rotor 14, dans le volume V16 et à l'intérieur de la partie tubulaire 162. Le palier à air radial permet de centrer le rotor 14 autour de l'axe X16, à l'intérieur du corps 16.

Les paliers de la turbine 12 peuvent, en variante, être des paliers à roulement.

En configuration assemblée de la turbine représentée aux figures 1 à 4 et 6, les ailettes 142 sont disposées dans une chambre de rotation 26 ménagée entre les portions 162 et 164 du corps 16, dans une partie laissée libre par le rotor 14.

L'embase 164 est fixée sur la partie tubulaire 162 au moyen de plusieurs vis 167 qui traversent l'embase de part en part, parallèlement à l'axe X164, et sont reçues dans des taraudages correspondants de la partie tubulaire 162.

Des vis 28 traversent des alésages 282 et 284 prévus respectivement à travers la partie tubulaire 162 et à travers l'embase 164 et permettent d'immobiliser la turbine 12 contre la partie principale 20.

La partie tubulaire 162 présente une forme extérieure étagée. Plus précisément, la partie 162 est à section transversale circulaire autour de l'axe X162 et comprend une portion avant 162A, disposée du côté du bol 10 lorsque celui-ci est en place, c'est-à-dire vers l'avant du pulvérisateur, et qui présente un premier diamètre externe D162A. La partie 162 comprend également une partie arrière 162B opposée au bol 10 lorsque celui-ci est monté, c'est-à-dire disposée vers l'arrière du pulvérisateur, et qui présente un deuxième diamètre externe D162B strictement supérieur au premier diamètre D162A. L'embase 164 est également à section transversale circulaire autour de l'axe X164 et présente un diamètre externe D164 identique au diamètre D162B. Ainsi, les parties 162B et 164 constituent la portion du corps 16 de plus grand diamètre.

En variante les parties 162 et/ou 164 ne sont pas à sections transversales externes circulaires. Dans ce cas, la partie tubulaire est étagée en ce sens que la plus grande dimension externe de la portion avant 162A, transversale à l'axe X162, est strictement inférieure à la plus grande dimension externe de la portion arrière 162A, transversale à l'axe X162. Les parties 162B et 164 constituent également la portion du corps de plus grande dimension transversale par rapport à l'axe X16.

La portion avant 162A est entourée par le corps auxiliaire 22 qui supporte des composants voisins et dans lequel sont ménagés des conduits de circulation non représentés. Ce corps auxiliaire 22 est parfois dénommée « jupe interne ». Il est réalisé dans un matériau isolant thermiquement, tel qu'une matière plastique, de sorte qu'il isole la portion avant 162A d'un capot 90 qui habille le corps de turbine 16 et le corps auxiliaire 22.

Des pions de détrompage 30 permettent d'orienter la turbine 12 autour de l'axe X2 par rapport à la partie principale 20, sur l'arrière, et par rapport à la jupe interne 22, sur l'avant.

La chambre de rotation 26 est alimentée en air d'entraînement en rotation du rotor 14 à travers deux conduites 120 et 122, elles-mêmes alimentées en air par des conduites 80 et 82 ménagées dans la partie principale 20.

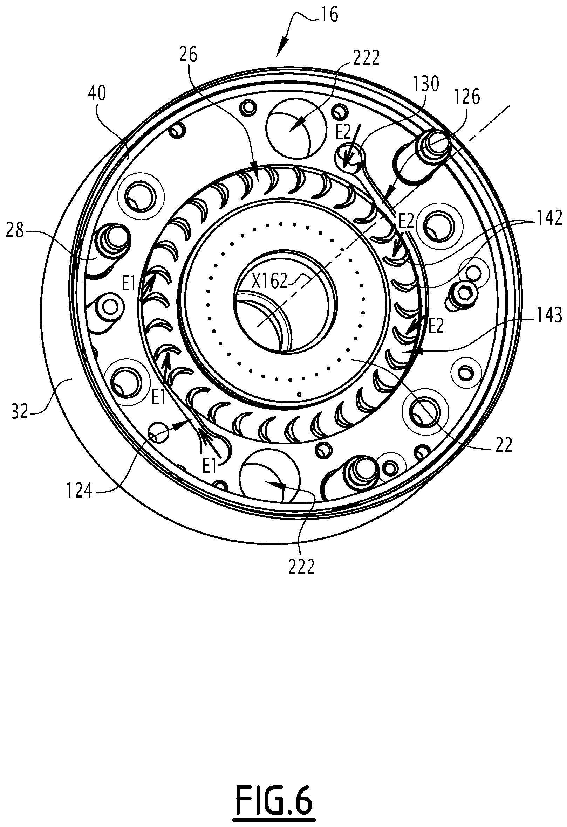

La conduite 120 est rectiligne, dans l'exemple parallèle à l'axe X16 et raccordée directement à une gorge 124 en portion de spirale centrée sur l'axe X16. La conduite 120 est ménagée dans l'embase 164, alors que la gorge 124 est ménagée dans la partie tubulaire 162. L'écoulement de l'air d'entraînement dans le corps 16, selon ce premier trajet, est représenté par les flèches E1 aux figures 2 et 6.

La conduite 122 est reliée à une deuxième gorge 126, également en portion de spirale centrée sur l'axe X16, qui débouche dans la chambre 26 et qui est ménagée dans la partie tubulaire 162.

Ici, les gorges 124 et 126 sont ménagées dans la partie 162 de façon symétrique par rapport à l'axe X162.

En pratique, dans cet exemple, les gorges 124 et 126 sont ménagées dans une face de la portion 162B tournée vers l'embase 164 et s'étendent perpendiculairement aux axes X162 et X16, donc à l'axe X2 en configuration montée du pulvérisateur 2.

La conduite 122 est rectiligne, dans l'exemple parallèle à l'axe X2, et raccordée à un coude 128 qui débouche sur la surface périphérique S164 de l'embase 164, en regard d'une bague 32 qui entoure à la fois les parties 162B et 164 du corps 16.

D'autre part, un coude 130 est prévu dans la partie annulaire 162 et débouche sur la surface périphérique externe S162 de la portion 162B.

Les surfaces S162 et S164 sont affleurantes et ont le même diamètre, D162B ou D164, ce qui correspond au fait que la bague 32 a le même diamètre sur sa longueur L32 parallèle à l'axe X2.

Si, en variante, les diamètres D162B et D164 sont différents, la bague 32 peut être étagée.

À l'opposé de son débouché sur la surface S162, le coude 130 est relié à la gorge en spirale 126.

Selon une direction radiale à l'axe X2, entre les surfaces S162 et S164, d'une part, et une surface radiale interne 322 de la bague 32, il est formé une chambre annulaire 132 qui constitue une portion du conduit d'alimentation de la chambre 26 en air d'entraînement, ce conduit d'alimentation étant constitué des volumes 122, 128, 132, 130 et 126 dans lesquels s'écoule l'air d'entraînement, comme représenté par les flèches d'écoulement E2 aux figures 2, 3 et 6. La chambre 132 est intermédiaire entre l'entrée du conduit d'alimentation, qui est constituée par l'embouchure de la conduite 122, et la sortie de ce conduit, qui est constituée par le débouché de la conduite 136 dans la chambre de rotation 26.

Les coudes 128 et 130 permettent de dévier l'écoulement d'air d'entraînement E2 selon des directions radiales à l'axe X16, donc à l'axe X2 en configuration montée du pulvérisateur 2, par rapport aux conduites 122 et 126. Ceci permet que l'air d'entraînement circule dans une zone périphérique 168 du corps 16 qui est radialement plus éloignée de l'axe X16 que les conduites 120 et 122.

La surface radiale interne 322 de la bague 32 est pourvue de nervures 36 qui créent autant de chicanes dans la chambre 132, ce qui a pour effet d'augmenter la surface de contact entre l'air circulant entre les coudes 128 et 130 dans la chambre 132 et la bague 32. Ainsi, les nervures 36 sont configurées pour favoriser un échange thermique entre l'air d'entraînement circulant dans la chambre 132 et la bague 32.

On note L32 la longueur axiale de la bague 32, c'est-à-dire la longueur de la bague mesurée parallèlement à l'axe X16.

On note par ailleurs L162 la longueur axiale, mesurée parallèlement à l'axe X162, de la portion 162B de la partie tubulaire 162 et L164 la longueur axiale, mesurée parallèlement à l'axe X164, de l'embase 164.

Dans l'exemple, la longueur L32 est égale à la somme des longueurs L162 et L164. En pratique, le rapport L32/(L162+L164) est choisi supérieur à 0,8, de préférence supérieur 0,95. En d'autres termes, la bague 32 entoure la partie la plus large du corps 16 sur l'essentiel de sa longueur mesurée parallèlement à l'axe de rotation.

En variante, le rapport L32/(L162+L164) peut être strictement supérieur à 1.

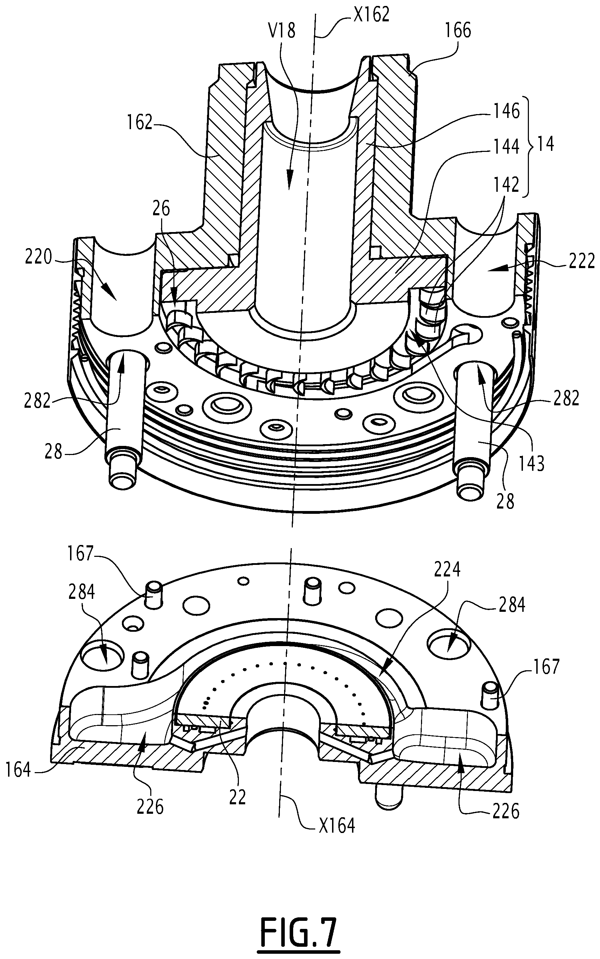

Dans la partie de plus grande largeur du corps 16 et comme montré à la figure 7, il est prévu une gorge en spirale 224 comparable aux gorges 124 et 126. L'air d'échappement est formé par l'air d'entraînement, après que cet air a servi à mettre en mouvement le rotor 14 autour de l'axe X2, en exerçant un effort orthoradial à l'axe X2 sur les ailettes 142. La gorge en spirale 224 débouche dans deux cavités 226 reliées à deux conduites 220 et 222 qui forment les conduites d'échappement d'air vers l'extérieur du corps 16. L'écoulement de l'air d'échappement est représenté par les flèches E3 à la figure 4. Les volumes 220 à 226 constituent ensemble un collecteur d'air d'échappement pour la turbine 12.

On remarque à la figure 4 que la bague 32 permet de « masquer » selon une direction radiale à l'axe X2, le collecteur d'échappement 220-226 vis-à-vis de l'extérieur du corps 16, en particulier vis-à-vis du capot 90 qui entoure le corps 2A et la turbine 12.

Grâce à la chambre annulaire 132 constituée entre le corps 16 et la bague 32, radialement à l'axe X16, donc à l'axe X2 en configuration montée du pulvérisateur 2, l'air d'entraînement du rotor 14 circule au voisinage de la surface la plus extérieure du corps 16 avant d'être détendu, c'est-à-dire alors qu'il est à une température relativement élevée, de l'ordre de 20 à 25°C dans un atelier de peinturage automobile où la température est régulée.

Ceci permet de maintenir la bague 32 à cette température de l'air d'entraînement avant détente, ou à une température proche de cette température. Par « proche », on entend qu'une différence entre la température de la bague 32 et la température de l'air d'entraînement avant détente est inférieure à 5°C.

Le matériau constitutif de la bague 32 est avantageusement choisi pour faciliter les échanges thermiques avec l'air circulant dans la chambre 132.

Ainsi, la bague 32 peut être réalisée en métal, par exemple en acier ou en aluminium.

Comme la longueur L32 est sensiblement égale à la somme des longueurs L162 et L164 et comme, en régime établi, la bague 32 est à une température homogène, son contact avec l'air circulant dans la chambre 132 lui permet d'éviter la condensation d'eau sur toute la longueur L162+L164 de la portion du corps 16 constitué des parties 162B et 164, qui est la portion de ce corps qui a les plus grandes dimensions transversalement à l'axe X2 et à l'axe X16.

Au niveau de la chambre 132, la bague 32 n'est pas en contact avec les parties 162B et 164. En particulier, les nervures 36 s'étendent à distance des surfaces S162 et S164, selon une direction radiale à l'axe X116. En d'autre termes, un jeu J36, radial à l'axe X16 et d'épaisseur non nulle, existe entre chaque nervure et la surface S162 ou S164 qui est en regard de cette nervure. Ceci permet la circulation de l'air d'entrainement selon une direction parallèle à l'axe X16 dans la chambre 132, entre les débouchés des coudes 128 et 130.

La bague 32 est pourvue de deux talons 38 disposés de part et d'autre des nervures 36 et qui ont chacun une surface tronconique 382, disposée à l'opposé des nervures 36. Les surfaces tronconiques 382 convergent l'une vers l'autre en se rapprochant de l'axe X16. Chaque surface tronconique 382 est inclinée à environ 45° par rapport à l'axe X16 et vient en appui contre un joint d'étanchéité 40 qui, en configuration non contrainte, est un joint torique et qui est comprimé dans un volume de réception 42 de section triangulaire. Un premier volume 42 est ménagé entre un premier talon 38 et la portion 162B du corps 16, alors qu'un deuxième volume 42 est ménagé entre le deuxième talon 38 et l'embase 164.

Les talons 38 ne sont pas non plus en contact avec les surfaces S162 et S164, du fait de l'existence d'un jeu radial entre ces talons et ces surfaces. Ainsi la bague 32 n'est pas en contact direct avec le corps 16.

Compte tenu des orientations respectives des surfaces tronconiques 382 des deux talons 38, la compression des joints toriques 40 a pour effet d'exercer sur la bague 32 un effort de coincement qui immobilise la bague 32 sur le corps 16. En outre, cette compression des joints toriques 40 a pour effet d'isoler fluidiquement la chambre 132 de l'extérieur du corps 16 et d'éviter une transmission du froid entre le corps 16 et la bague 32 par conduction.

Le pulvérisateur 2 étant un pulvérisateur électrostatique, il comprend le sous-ensemble 56 porté à la haute tension lorsque le pulvérisateur fonctionne et qui entoure la partie avant de la turbine 12. Ce sous ensemble 56 est un des composants du pulvérisateur 2 et définit des canaux 58 de circulation d'un air de conformation du nuage de gouttelettes de produit de revêtement quittant l'arête du bol, ce sous-ensemble 56 étant parfois qualifié de « jupe de conformation ».

Dans le cas d'un pulvérisateur à charge externe, les parties du pulvérisateur 2 portées à la haute tension incluent des électrodes non représentées.

En variante, le pulvérisateur peut ne pas être électrostatique. Dans ce cas, il est dépourvu de parties à la haute tension et d'électrodes.

Comme la bague 32 est métallique dans l'exemple, il faut éviter qu'elle soit à un potentiel électrique flottant, surtout à cause de la haute tension appliquée au sous-ensemble 56, qui est de l'ordre de -60 à -100 kV.

Un dispositif 60 de maintien de la bague 32 au potentiel électrique du corps 16 est constitué par un ressort hélicoïdal en matériau électriquement conducteur, en particulier en métal, disposé dans un trou borgne 64 du corps 16 et qui pousse une bille 66, selon une direction radiale et centrifuge par rapport à l'axe X16, en appui contre la surface périphérique interne 322 de la bague 32. Ainsi, même si elle n'est pas en contact avec le corps 16 au niveau des nervures 36 et des talons 38, la bague 32 est maintenue au potentiel électrique du corps 16 par le dispositif 60.

Grâce à l'invention, la chambre 132, qui constitue une portion du conduit d'alimentation de la chambre de rotation 26 en air d'entraînement, permet à l'air qui la traverse de maintenir la bague 32 à une température relativement élevée, égale ou proche de celle de l'air d'entraînement en entrée du corps 16. Ceci induit que la surface périphérique externe du corps 16 dans sa partie la plus large, qui est formé par la surface périphérique externe 324 de la bague 32, ne risque pas d'être à une température qui pourrait induire la condensation d'eau même, si le circuit d'évacuation de l'air d'échappement qui comprend les portions 220 à 229 est également ménagé dans cette partie du corps 16. Ce contrôle de la température de la surface périphérique 324 de la bague 32, donc de la surface périphérique du corps 16, a lieu sans surconsommation d'air puisque l'air qui transite par la chambre intermédiaire 132 fait partie de l'air d'entraînement en rotation du rotor 14 de la turbine 12.

Ainsi, le capot 90 du pulvérisateur 2 ne risque pas de voir sa température baisser au voisinage de la partie la plus large du corps 16, au point que des gouttelettes de condensation se formeraient sur sa surface extérieure, même si l'air présent dans la cabine de revêtement dans laquelle est disposé le pulvérisateur 2 présente une humidité relative importante, par exemple supérieure à 55%. La température de surface du pulvérisateur 2, au niveau du capot 90, est ainsi contrôlée en limitant un abaissement de la température du capot 90 qui pourrait résulter de la circulation de l'air d'échappement.

Les risques de détérioration de la couche de produit de revêtement appliquée sont donc minimisés grâce à l'invention.

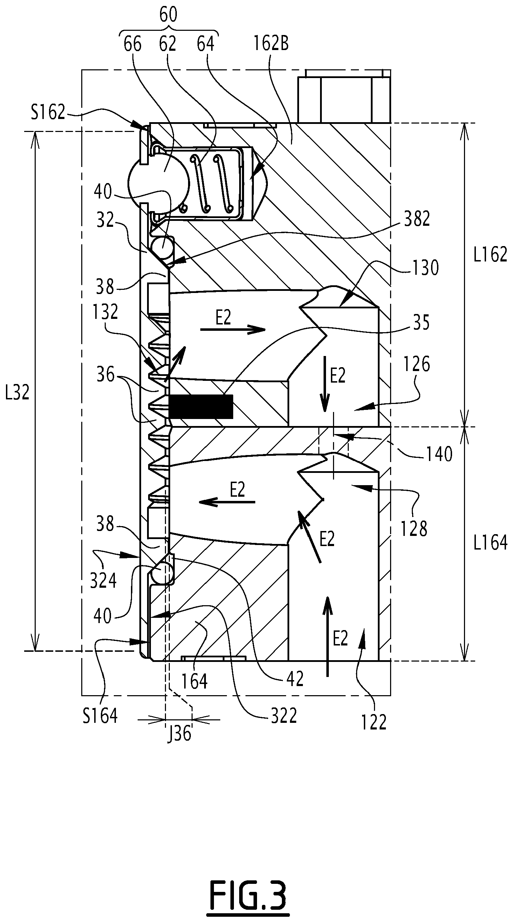

Selon un aspect de l'invention représenté uniquement à la figure 3, un capteur de température 35 est intégré à l'embase 164 et permet de détecter la température de l'air transitant dans la chambre intermédiaire 132, donc d'estimer la température de la bague 32.

En variante, le capteur 35 est installé pour détecter directement la température de la bague 32 ou celle du capot 90.

L'invention permet de mettre en œuvre un procédé de contrôle de la température de surface du pulvérisateur 2, au niveau du capot 90. Ce procédé comprend une étape d'alimentation la chambre de rotation 26 en air d'entraînement, au cours de laquelle un écoulement d'air d'entraînement, représenté par les flèches E2, est dévié vers la zone 168 du corps 16, plus particulièrement vers la chambre intermédiaire 132, pour contrôler la température de cette partie 168. Ceci limite un abaissement de la température de la partie 168 et du capot 90 et évite que l'eau ne condense au voisinage de cette zone 168, en particulier sur le capot 90.

De façon avantageuse, le signal de sortie du capteur 35 est fourni à une unité non représentée de contrôle du pulvérisateur 2, qui est configurée pour ajuster les paramètres de fonctionnement du pulvérisateur. Par exemple, un calculateur de l'unité de contrôle peut être programmé pour diminuer la vitesse de rotation du rotor 14 si la température détectée par le capteur 35 s'approche de la température du point de rosée, à moins de 2°C près. En outre, cette unité peut être configurée pour adresser un message d'alerte à une unité de contrôle principale de la température ou de l'humidité de l'air présent dans une cabine dans laquelle est disposé le pulvérisateur 2, en fonction de la température détectée par le capteur 35. Par exemple, si la température détectée par le capteur 35 s'approche de la température du point de rosée, à moins de 2°C près, l'unité de contrôle principale peut augmenter la température de consigne de l'air ambiant ou diminuer son humidité relative.

Les parties 20, 22 et 56 font partie du corps 2A du pulvérisateur 2.

Selon une variante non représentée de l'invention, les nervures 36 sont remplacées par un filet ménagé sur la surface périphérique interne 322 de la bague 32.

Selon une autre variante non représentée de l'invention, la circulation d'air peut avoir lieu au sein d'un conduit interne à la bague 32, par exemple un conduit hélicoïdal. Ceci est notamment envisageable avec une bague 32 fabriquée par impression 3D.

Selon une autre variante, la surface périphérique interne 322 de la bague 32 est lisse, c'est-à-dire dépourvue de relief.

Selon une autre variante de l'invention, la bague 32 peut être réalisée dans un matériau autre que métallique, notamment dans un matériau plastique, composite ou céramique.

Selon une autre variante de l'invention, seule une partie de l'écoulement d'air d'entraînement circulant dans la conduite 122 est dirigée vers la chambre 132. Pour ce faire, une communication directe, de diamètre réduit, est ménagée entre le coude 128 et la gorge 126, au moyen d'un conduit 140 qui est représenté en traits d'axe à la figure 3 uniquement.

Selon une autre variante non représentée de l'invention, la chambre 132 est alimentée en air d'entraînement à partir des deux conduites 120 et 122 et les deux gorges 124 et 126 sont alimentées à partir de la chambre 132.

Selon une autre variante non représentée de l'invention, le ressort 62 est en appui direct sur la bague 32, sans interposition de la bille 66.

Selon une autre variante non représentée de l'invention, les coudes 128 et 130 ne sont pas disposés dans le même plan radial vis-à-vis de l'axe X16, mais décalés angulairement autour de cet axe.

En variante, la zone périphérique 168 peut être définie comme une zone du corps 16 dont le diamètre est supérieur à 75%, de préférence à 90%, des diamètres D162B et D164.

Selon une autre variante non représentée de l'invention, la chambre 132 peut être définie, radialement à l'axe X2, entre le corps 12 et le capot 90. Dans ce cas, le capot 90 constitue une bague, au sens de la bague 32 du mode de réalisation représenté sur les figures, sans avoir à ajouter une pièce supplémentaire par rapport aux pulvérisateurs connus.

Selon une variante ne relevant pas de l'invention revendiquée, le composant alimenté par le conduit qui inclut la chambre intermédiaire 132 n'est pas la turbine 12, mais le sous-ensemble 56 qui définit les canaux 58. Dans ce cas, l'air qui circule dans la chambre intermédiaire 132 est l'air de jupe, destiné à transiter à travers les canaux 58 et qui est utilisé pour conformer le nuage de gouttelettes de produit de revêtement quittant l'arête du bol 10 lorsque le pulvérisateur 2 fonctionne. Dans ce cas également, l'air qui circule dans la chambre intermédiaire ne doit donc pas être amené au pulvérisateur en plus de l'air utilisé pour assurer le fonctionnement normal du pulvérisateur. Ce mode de réalisation peut être mis en œuvre indépendamment ou en complément de celui représenté sur les figures.

Selon encore une autre variante ne relevant pas de l'invention revendiquée, le composant alimenté par le conduit qui inclut la chambre intermédiaire 132 n'est pas la turbine 12, mais un microphone utilisé pour mesurer la vitesse de rotation du rotor 14. Dans ce cas, l'air qui circule dans la chambre intermédiaire est un air d'alimentation d'une ou plusieurs cavités, non représentées et solidaires du rotor. Le microphone est installé en aval de ces cavités pour détecter la fréquence d'un bruit induit par l'écoulement d'air dans les cavités et transmettre un signal correspondant à une unité de calcul qui détermine la vitesse de rotation du rotor sur la base de cette fréquence. Là encore, l'air qui circule dans la chambre intermédiaire ne doit donc pas être amené au pulvérisateur en plus de l'air utilisé pour assurer le fonctionnement normal du pulvérisateur. Ce mode de réalisation peut également être mis en œuvre indépendamment ou en complément de celui représenté sur les figures.

L'invention peut être mise en œuvre pour le revêtement de carrosseries de véhicules automobiles, de composants de véhicules, de carcasse d'appareils électroménagers et plus généralement pour toute application d'un pulvérisateur rotatif de produit de revêtement.

Les modes de réalisation des variantes envisagées ci-dessus peuvent être combinés pour générer de nouveaux modes de réalisation de l'invention, tant que ceux-ci sont couverts par le jeu de revendications.

## Revendications

1. Pulvérisateur rotatif (2) de produit de revêtement comprenant un bol de pulvérisation (10) tournant autour d'un axe de rotation (X2) et une turbine à air (12) d'entraînement du bol en rotation autour de l'axe de rotation, cette turbine comprenant un rotor (14) et un corps (16) formant un support pour le rotor et définissant au moins un conduit d'alimentation (120-132) en air d'une chambre de rotation (26) dans laquelle sont disposés des ailettes (142) du rotor, le conduit (120-132) d'alimentation en air de la chambre de rotation (26) comprenant une chambre intermédiaire (132) définie, radialement à l'axe de rotation (X2), entre le corps (16) et une bague (32, 90) montée autour de ce corps et
**caractérisé en ce que** la bague (32) est pourvue, sur sa surface radiale interne (322), d'au moins un relief, notamment de nervures (36) ou d'un filet, configuré pour favoriser un échange thermique entre, d'une part, l'air circulant dans la chambre intermédiaire (132) et, d'autre part, la bague.

2. Pulvérisateur selon la revendication 1, **caractérisé en ce que** le conduit d'alimentation (120-132) comprend au moins une branche (122) qui s'étend parallèlement à l'axe de rotation (X2) et un coude (128) qui relie cette branche avec la chambre intermédiaire (132), radialement à l'axe de rotation.

3. Pulvérisateur selon l'une des revendications précédentes, **caractérisé en ce que** le conduit d'alimentation (120-132) comprend
- une portion (126) en spirale perpendiculaire à l'axe de rotation (X2), qui débouche dans la chambre de rotation (26), et
- un coude (130) qui relie la chambre intermédiaire (132) avec la portion en spirale.

4. Pulvérisateur selon l'une des revendications précédentes, **caractérisé en ce que** le corps (16) comprend un partie tubulaire (162) qui définit un logement (V16) de réception du rotor (14) et une embase (164) qui obture le logement à l'opposé du bol (10) et **en ce que** la bague (32) est monté à la fois autour de la partie tubulaire et de l'embase.

5. Pulvérisateur selon l'une des revendications précédentes, **caractérisé en ce que** la bague (32) est en métal.

6. Pulvérisateur selon l'une des revendications précédentes, **caractérisé en ce qu'**il comprend un sous-ensemble (60) d'équilibrage de potentiel électrique entre la bague (32) et le corps (16), ce sous-ensemble étant prévu notamment sous la forme d'un organe (62) électriquement conducteur élastiquement déformable en appui, direct ou via un élément électriquement conducteur rapporté (66), contre la bague (32) et contre le corps (16).

7. Pulvérisateur selon l'une des revendications précédentes, **caractérisé en ce que** la bague (32) est immobilisée autour du corps (16) par coincement.

8. Pulvérisateur selon la revendication précédente, **caractérisé en ce qu'**au moins un joint d'étanchéité (40), de préférence deux joints d'étanchéité, est ou sont interposé(s) entre le corps (16) et la bague (32) et contribue(nt) au coincement de la bague autour du corps.

9. Pulvérisateur selon l'une des revendications précédentes, **caractérisé en ce que** la chambre intermédiaire (132) est ménagée autour d'une partie (162B, 164) du corps dans laquelle est ménagé un collecteur (220-226) de gaz d'échappement de la turbine (12).

10. Pulvérisateur selon l'une des revendications précédentes, **caractérisé en ce qu'**il est équipé d'un capteur de température (35) pour déterminer la température de l'air dans la chambre intermédiaire (132), la température de la bague (32) ou la température d'un capot (90) du pulvérisateur (2).

11. Procédé de contrôle d'une température de surface d'un pulvérisateur rotatif (2) de produit de revêtement comprenant un bol de pulvérisation (10) tournant autour d'un axe de rotation (X2) et une turbine à air (12) d'entraînement du bol en rotation autour de l'axe de rotation, cette turbine comprenant un rotor (14) et un corps (16) formant un support pour le rotor, ce procédé comprenant une étape d'alimentation en air d'une chambre de rotation (26) dans laquelle sont disposées des ailettes (142) du rotor, l'étape d'alimentation comprenant une sous-étape consistant à dévier un écoulement (E2) d'air d'entrainement du rotor (14) vers une zone périphérique (168) du corps (16) et vers une chambre intermédiaire (132) définie, radialement à l'axe de rotation (X2), entre le corps (16) et une bague (32, 90) montée autour de ce corps et **caractérisé en ce que** la bague est pourvue, sur sa surface radiale interne (322), d'au moins un relief, notamment de nervures (36) ou d'un filet, pour limiter un abaissement de la température d'un élément d'habillage (90) du pulvérisateur (2).

12. Procédé selon la revendication précédente, dans lequel le pulvérisateur est selon la revendication 10, **caractérisé en ce qu'**une unité de contrôle du pulvérisateur est configurée pour ajuster les paramètres de fonctionnement du pulvérisateur (2), ou d'une cabine dans laquelle est installé le pulvérisateur, en fonction du signal de sortie du capteur (35).

## Patentansprüche

1. Rotationszerstäuber (2) für Beschichtungsmaterial, umfassend eine um eine Drehachse (X2) drehbare Zerstäubungsschüssel (10) und eine Luftturbine (12), um die Schüssel in Drehung um die Drehachse zu versetzen, wobei diese Turbine einen Rotor (14) und einen Körper (16) umfasst, der eine Halterung für den Rotor bildet und einen Versorgungskanal (120-132) für Luft einer Rotationskammer (26) definiert, in der Schaufeln (142) des Rotors angeordnet sind, der Kanal (120-132) zur Luftversorgung der Rotationskammer (26) umfassend
eine Zwischenkammer
(132), die radial zu der Drehachse (X2) zwischen dem Körper (16) und einem Ring (32, 90), der um diesen Körper montiert ist, definiert ist, und
**dadurch gekennzeichnet, dass** der Ring (32) auf seiner radialen Innenfläche
(322) mit mindestens einem Relief versehen ist, insbesondere Rippen (36) oder ein Netz, die/das konfiguriert sind, um einen Wärmeaustausch zwischen einerseits der in der Zwischenkammer (132) zirkulierenden Luft und andererseits dem Ring zu begünstigen.

2. Zerstäuber nach Anspruch 1, **dadurch gekennzeichnet, dass** der Versorgungskanal (120-132) mindestens einen Zweig (122), der sich parallel zur Drehachse (X2) erstreckt, und eine Krümmung (128), die diesen Zweig mit der Zwischenkammer (132) radial zur Drehachse verbindet, umfasst.

3. Zerstäuber nach einem der vorherigen Ansprüche, **dadurch gekennzeichnet, dass** der Versorgungskanal (120-132)
- einen spiralförmigen Abschnitt (126) senkrecht zu der Drehachse (X2) umfasst, der in die
Rotationskammer (26) mündet, und
- einen Bogen (130), die die Zwischenkammer (132) mit dem spiralförmigen Abschnitt verbindet.

4. Zerstäuber nach einem der vorherigen Ansprüche, **dadurch gekennzeichnet, dass** der Körper (16) einen rohrförmigen Abschnitt (162) umfasst, der eine Aufnahme (V16) zum Aufnehmen des Rotors (14) definiert, und einen Sockel (164), der die Aufnahme gegenüber der Schüssel (10) verschließt, und dass der Ring (32) sowohl um den röhrenförmigen Teil als auch um den Sockel herum montiert ist.

5. Zerstäuber nach einem der vorherigen Ansprüche, **dadurch gekennzeichnet, dass** der Ring (32) aus Metall ist.

6. Zerstäuber nach einem der vorherigen Ansprüche, **dadurch gekennzeichnet, dass** er eine Untereinheit (60) zum Ausgleichen des elektrischen Potenzials zwischen dem Ring (32) und dem Körper (16) umfasst, wobei diese Untereinheit insbesondere in Form eines elastisch verformbaren, elektrisch leitenden Organs (62) bereitgestellt ist, das direkt oder über ein angesetztes elektrisch leitendes Element (66) gegen den Ring (32) und an dem Körper (16) anliegt.

7. Zerstäuber nach einem der vorherigen Ansprüche, **dadurch gekennzeichnet, dass** der Ring (32) durch Verklemmen um den Körper (16) herum fixiert ist.

8. Zerstäuber nach dem vorherigen Anspruch, **dadurch gekennzeichnet, dass** mindestens eine Dichtung (40), vorzugsweise zwei Dichtungen, zwischen dem Körper (16) und dem Ring (32) angeordnet ist bzw. sind und zum Verklemmen des Rings um den Körper beiträgt bzw. beitragen.

9. Zerstäuber nach einem der vorherigen Ansprüche, **dadurch gekennzeichnet, dass** die Zwischenkammer (132) um einen Abschnitt (162B, 164) des Körpers herum angeordnet ist, in dem ein Sammler (220-226) für die Abgase der Turbine (12) ausgebildet ist.

10. Zerstäuber nach einem der vorherigen Ansprüche, **dadurch gekennzeichnet, dass** er mit einem Temperatursensor (35) ausgestattet ist, um die Temperatur der Luft in der Zwischenkammer (132), die Temperatur des Rings (32) oder die Temperatur einer Haube (90) des Zerstäubers (2) zu bestimmen.

11. Verfahren zur Steuerung einer Oberflächentemperatur eines Rotationszerstäubers (2) für ein Beschichtungsprodukt, der eine um eine Drehachse (X2) drehbare Zerstäubungsschüssel (10) und eine Luftturbine (12) zum Antrieb der Schüssel in Drehung um die Drehachse umfasst, wobei diese Turbine einen Rotor (14) und einen Körper (16) umfasst, der einen Träger für den Rotor bildet, wobei dieses Verfahren einen Schritt zur Luftversorgung einer Rotationskammer (26), in der Schaufeln (142) des Rotors angeordnet sind, umfasst, wobei der Versorgungsschritt Folgendes umfasst :
einen Unterschritt eines Ablenkens
einer Strömung (E2) von Antriebsluft des Rotors (14) zu einem Umfangsbereich (168) des Körpers (16) und zu einer Zwischenkammer (132), die radial zur Drehachse (X2) zwischen dem Körper (16) und einem Ring (32, 90) definiert ist, der um diesen Körper montiert ist, und **dadurch gekennzeichnet, dass** der Ring auf
seiner inneren radialen Oberfläche (322) mit mindestens einem Relief, insbesondere mit Rippen (36) oder einem Netz, versehen ist, um ein Absinken der Temperatur eines Verkleidungselements (90) des Zerstäubers (2) zu begrenzen.

12. Verfahren nach dem vorherigen Anspruch, wobei der Zerstäuber nach Anspruch 10 ist, **dadurch gekennzeichnet, dass** eine Steuereinheit des Zerstäubers konfiguriert ist, um die Betriebsparameter des Zerstäubers (2) oder einer Kabine, in der der Zerstäuber installiert ist, basierend auf dem Ausgangssignal des Sensors (35) anzupassen.

## Claims

1. A rotary sprayer (2) for a coating product, comprising a spray bowl (10) rotating about an axis of rotation (X2) and an air turbine (12) for rotating the bowl about the axis of rotation, wherein said turbine comprises a rotor (14) and a body (16) forming a support for the rotor and defining at least one feedline (120-132) for feeding air to a rotation chamber (26) wherein rotor blades (142) are arranged, the feedline (120-132) for feeding air to the rotation chamber (26) comprising an intermediate chamber (132) which is defined, radially to the rotation axis (X2), between the body (16) and a ring (32, 90) mounted around this body **characterized in that** the ring (32) is provided, on the inner radial surface (322) thereof, with at least one pattern in relief, in particular with ribs (36) or a thread, configured to enhance a heat exchange between, on the one hand, the air circulating inside the intermediate chamber (132) and, on the other hand, the ring.

2. The sprayer according to claim 1, **characterized in that** the feedline (120-132) comprises at least one branch (122) which extends parallel to the axis of rotation (X2) and an elbow (128) which connects said branch with the intermediate chamber (132), radially to the axis of rotation.

3. The sprayer according to one of the preceding claims, **characterized in that** the feedline (120-132) comprises
- a spiral portion (126) perpendicular to the axis of rotation (X2), which opens into the rotation chamber (26), and
- an elbow (130) that connects the intermediate chamber (132) with the spiral portion.

4. The sprayer according to one of the preceding claims, **characterized in that** the body (16) comprises a tubular part (162) which defines a housing (V16) for receiving the rotor (14) and a base (164) which closes off the housing opposite the bowl (10), and **in that** the ring (32) is mounted both around the tubular part and the base.

5. The sprayer according to one of the preceding claims, **characterized in that** the ring (32) is made of metal.

6. The sprayer according to one of the preceding claims, **characterized in that** it comprises a sub-assembly (60) for balancing the electrical potential between the ring (32) and the body (16), wherein said sub-assembly is provided in particular in the form of an elastically deformable electrically conducting member (62) which rests, directly or via an attached electrically conducting element (66), against the ring (32) and against the body (16).

7. The sprayer according to one of the preceding claims, **characterized in that** the ring (32) is immobilized around the body (16) by wedging.

8. The sprayer according to the preceding claim, **characterized in that** at least one seal (40), preferably two seals, is or are placed in-between the body (16) and the ring (32) and contribute(s) to the wedging of the ring around the body.

9. The sprayer according to one of the preceding claims, **characterized in that** the intermediate chamber (132) is formed around a portion (162B, 164) of the body wherein a manifold (220-226) of exhaust gases from the turbine (12) is formed.

10. The sprayer according to one of the preceding claims, **characterized in that** it is equipped with a temperature sensor (35) for determining the temperature of the air in the intermediate chamber (132), the temperature of the ring (32) or the temperature of a cover (90) of the sprayer (2).

11. A method for controlling a surface temperature of a rotary coating product sprayer (2) comprising a spray bowl (10) rotating about an axis of rotation (X2) and an air turbine (12) for rotating the bowl about the axis of rotation, the turbine comprising a rotor (14) and a body (16) forming a support for the rotor, the method comprising a step of feeding air to a rotation chamber (26) wherein blades (142) of the rotor are arranged, the feed step comprising a sub-step consisting of diverting a flow (E2) of driving air for the rotor to a peripheral zone (168) of the body (16) and towards and intermediate chamber (132) defined, radially to the axis of rotation (X2), between the body (16) an a ring (32, 90) mounted around this body **characterized in that** the ring is provided, on its radially inner surface (322) , with at least one pattern in relief, in particular with ribs (36) or a thread, in order to limit a lowering of the temperature of a covering element (90) of the sprayer (2).

12. The method according to the preceding claim, wherein the sprayer is, according to claim 10, **characterized in that** a control unit of the sprayer is configured to adjust the operating parameters of the sprayer (2), or of a booth wherein the sprayer is installed, depending on the output signal of the sensor (35).
